# DEMANDE DE BREVET EUROPEEN

(11) **EP 1 055 570 A1**
(43) Date de publication de la demande: **29.11.2000**
(21) Numéro de dépôt: 00401415.5
(22) Date de dépôt: 23.05.2000
(51) Int. Cl.: B60R 25/02

(54) **Procédé d'armement d'un dispositif antivol d'un véhicule et système pour sa mise en oeuvre**

(30) Priorité: 26.05.1999 FR 9906626
(71) Demandeur: Valeo Securité Habitacle, 94042 Créteil (FR)
(72) Inventeur: Baudard, Xavier, 75016 Paris (FR)
(74) Mandataire: Lenne, Laurence

(57) **Abrégé**

L'invention concerne un procédé d'armement d'un dispositif antivol (2) disposé sur un véhicule (6) muni d'un système de démarrage mains libres, l'armement s'opérant après l'exécution de deux manoeuvres volontaires distinctes: la première étant l'arrêt du moteur du véhicule (6); la deuxième étant une action volontaire sur un ou plusieurs organes du véhicule autres qu'une clé, ladite action volontaire étant détectée par un ou plusieurs détecteurs (3, 4, 5) associés auxdits organes et qui envoient un signal de détection de l'action volontaire à une centrale électronique de commande (1) qui envoie en réponse un signal d'armement à un dispositif antivol électrique (2) de colonne de direction.

La deuxième manoeuvre volontaire consiste à effectuer une action volontaire sur plusieurs desdits organes selon une séquence prédéterminée.

## Description

La présente invention concerne un procédé d'armement d'un dispositif antivol d'un véhicule, et le système pour sa mise en oeuvre.

La réglementation communautaire en vigueur impose que l'armement de l'antivol de la colonne de direction d'un véhicule soit réalisé par deux opérations volontaires distinctes.

Dans les véhicules qui ne sont pas munis d'un système dit "démarrage mains libres", la première opération à effectuer est l'arrêt du moteur et la deuxième est le retrait de la clé de contact du dispositif permettant l'allumage du moteur.

Mais dans le cas d'un véhicule muni du système de démarrage mains libres, il ne peut plus y avoir de signal provenant du retrait de la clé. En effet, l'autorisation de démarrage vient d'un échange à distance de données d'identification entre un identifiant porté par l'utilisateur et un dispositif de reconnaissance embarqué sur le véhicule.

La présente invention a pour but de régler ce problème.

A cet effet, l'invention a pour objet un procédé d'armement d'un dispositif antivol disposé sur un véhicule muni d'un système de démarrage mains libres, caractérisé par le fait que l'armement s'opère après l'exécution de deux manoeuvres volontaires distinctes : la première étant. l'arrêt du moteur du véhicule ; la deuxième étant une action volontaire sur un ou plusieurs organes du véhicule autres qu'une clé, ladite action volontaire étant détectée par un ou plusieurs détecteurs associés auxdits organes et qui envoient un signal de détection de l'action volontaire à une centrale électronique de commande qui envoie en réponse, un signal d'armement au dispositif antivol électrique de colonne de direction.

Avantageusement, la deuxième manoeuvre volontaire consiste à effectuer une action volontaire sur plusieurs desdits organes selon une séquence prédéterminée.

L'invention vise aussi un système pour la mise en oeuvre du procédé précité, caractérisé par le fait qu'il comporte un antivol de colonne de direction à armement électrique, une centrale électronique de commande pour commander ledit antivol électrique, un ou plusieurs détecteurs reliés à ladite centrale, et aptes à être activés par une action volontaire de l'utilisateur sur un ou plusieurs organes du véhicule.

Dans un mode de réalisation particulier, au moins un détecteur est placé sur un organe de freinage du véhicule, tel que frein à main ou pédale de frein.

De préférence, au moins un détecteur est associé au siège du conducteur du véhicule, par exemple un détecteur de présence du conducteur sur le siège ou un détecteur d'enclenchement de la ceinture de sécurité pour ce siège.

Selon une autre caractéristique, au moins un détecteur est placé sur un organe associé à la portière conducteur du véhicule, tel qu'un contacteur de portière ouverte ou un organe de verrouillage de la serrure de la portière.

Selon encore une autre caractéristique, le signal d'armement est déclenché par la réception par l'unité centrale d'un signal de commande de verrouillage du véhicule, en provenance d'un boîtier de télécommande ou d'un identifiant du système de démarrage mains libres.

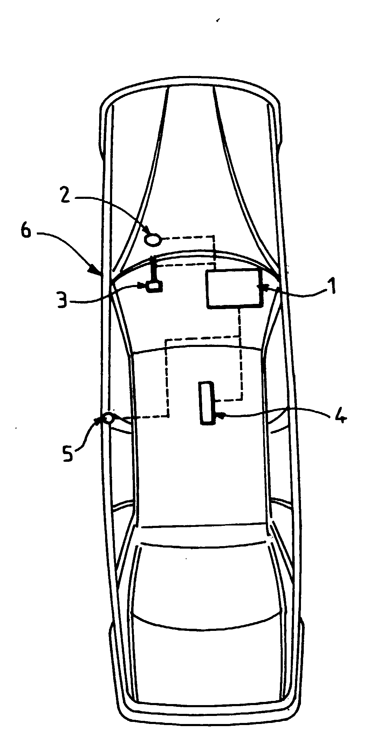

A titre d'exemple illustratif mais non limitatif, on a représenté au dessin annexé, une vue schématique de dessus d'un véhicule automobile 6 équipé d'un exemple de réalisation du dispositif selon l'invention.

En se reportant à cette figure, on voit que le véhicule est équipé : d'une centrale 1, appelée Unité Electronique de Gestion (UEG) ; d'un Antivol Electrique (AVE) 2 commandé par ladite UEG 1 ; et d'une série de détecteurs 3, 4, 5.

Le détecteur 3 est placé sur la pédale de frein ; le détecteur 4 est placé sur la poignée du frein secondaire ou frein à main ; le détecteur 5 est placé sur la portière du conducteur et détecte si cette portière est ouverte ou fermée.

Un détecteur peut n'être pas placé sur un organe de la voiture mais être placé sur une commande telle par exemple qu'un bouton qui doit être actionné par le conducteur. Ce bouton peut être à l'extérieur du véhicule.

On obtient ainsi, pour l'armement de l'antivol de colonne de direction, la succession requise de deux manoeuvres volontaires distinctes : d'abord l'arrêt du moteur ; puis l'une quelconque des opérations suivantes serrage du frein à main, appui sur la pédale de frein, sortie de la voiture avec fermeture de la portière, mise en oeuvre d'un contact placé à l'extérieur de la voiture ; ou encore une combinaison de deux ou plus de ces manoeuvres.

Bien que l'invention ait été décrite en liaison avec plusieurs variantes de réalisation particulières, il est bien évident qu'elle n'y est nullement limitée et qu'elle comprend tous les équivalents techniques des moyens décrits ainsi que leurs combinaisons, si celles-ci entrent dans le cadre de l'invention.

## Revendications

1. Procédé d'armement d'un dispositif antivol (2) disposé sur un véhicule (6) muni d'un système de démarrage mains libres, l'armement s'opérant après l'exécution de deux manoeuvres volontaires distinctes : la première étant l'arrêt du moteur du véhicule (6) ; la deuxième étant une action volontaire sur un ou plusieurs organes du véhicule autres qu'une clé, ladite action volontaire étant détectée par un ou plusieurs détecteurs (3, 4, 5) associés auxdits organes et qui envoient un signal de détection de l'action volontaire à une centrale électronique de commande (1) qui envoie en réponse, un signal d'armement à un dispositif antivol électrique (2) de colonne de direction, caractérisé par le fait que la deuxième manoeuvre volontaire consiste à effectuer une action volontaire sur plusieurs desdits organes selon une séquence prédéterminée.

2. Système pour la mise en oeuvre du procédé selon la revendication 1, caractérisé par le fait qu'il comporte un dispositif antivol de colonne de direction à armement électrique (2), une centrale électronique de commande (1) commandant ledit dispositif antivol électrique (2), un ou plusieurs détecteurs (3, 4, 5) reliés à ladite centrale (1), et aptes à être activés par une action volontaire de l'utilisateur sur un ou plusieurs organes du véhicule (6).

3. Système selon la revendication 2, caractérisé par le fait qu'au moins un détecteur (3, 4) est placé sur un organe de freinage du véhicule, tel que frein à main (4) ou pédale de frein (3).

4. Système selon la revendication 2 ou 3, caractérisé par le fait qu'au moins un détecteur est associé au siège du conducteur du véhicule, par exemple un détecteur de présence du conducteur sur le siège ou un détecteur d'enclenchement de la ceinture de sécurité pour ce siège.

5. Système selon l'une des revendications 2 à 4, caractérisé par le fait qu'au moins un détecteur (5) est placé sur un organe associé à la portière conducteur du véhicule, tel qu'un contacteur de portière ouverte ou un organe de verrouillage de la serrure de la portière.

6. Dispositif selon l'une des revendications 2 à 5, caractérisé par le fait que le signal d'armement est déclenché par la réception par l'unité centrale (1) d'un signal de commande de verrouillage du véhicule, en provenance d'un boîtier de télécommande ou d'un identifiant du système de démarrage mains libres.
